# EUROPÄISCHE PATENTANMELDUNG

(11) **EP 2 587 327 A1**
(43) Veröffentlichungstag der Anmeldung: **01.05.2013**
(21) Anmeldenummer: 11186948.3
(22) Anmeldetag: 27.10.2011
(51) Int. Cl.: G05B 23/02

(54) **Verfahren zum Betreiben eines Automatisierungsgerätes**

(71) Anmelder: Siemens Aktiengesellschaft, 80333 München (DE)
(72) Erfinder: Kort, Valentin, 76829 Landau (DE)

(57) **Zusammenfassung**

Die Erfindung betrifft ein Verfahren zum Betreiben eines Automatisierungsgerätes, das mehrere über einen Versorgungsbus verbundene Baugruppen (2 bis 4) aufweist, über welchen mittels einer Stromversorgungsbaugruppe (1) die Baugruppen (2 bis 4) mit einer Spannung versorgt werden. Dadurch, dass mittels einer Überwachungseinheit aus einem Laststrom (Il) eine einen Rippelstrom repräsentierende Gleichspannung (Ur) detektiert wird, wobei diese Gleichspannung (Ur) mit einem Referenzwert verglichen wird, welcher einen störungsfreien Betrieb der Baugruppen (2 bis 4) repräsentiert, und wobei das Vergleichsergebnis für eine Auswertung abgespeichert und/oder protokolliert wird, können Baugruppen (2 bis 4) erkannt werden, deren elektromagnetischen Eigenschaften für einen ordnungsgemäßen Betrieb eines Automatisierungsgerätes nicht geeignet sind.

## Beschreibung

Die Erfindung betrifft ein Verfahren zum Betreiben eines Automatisierungsgerätes sowie ein Automatisierungsgerät, das mehrere über einen Versorgungsbus verbundene Baugruppen aufweist, über welchen mittels einer Stromversorgungsbaugruppe die Baugruppen mit einer Gleichspannung versorgt werden.

Ein derartiges Verfahren sowie ein derartiges Automatisierungsgerät sind aus dem Siemens-Katalog ST 70, Ausgabe 2011, Kapitel 4 bekannt. Eine Stromversorgungseinheit bzw. -baugruppe erzeugt dort aus einer AC- oder DC-Eingangsspannung eine Gleichspannung zur Versorgung von Baugruppen, wobei ein Versorgungsbus zur Minimierung der Verlustleistung niederohmig ausgebildet ist. Insbesondere aufgrund von Schaltvorgängen in der Stromversorgungseinheit bzw. -baugruppe entsteht gewöhnlich ein hochfrequenter Wechselstrom - ein so genannter Rippelstrom -, welcher einem auf dem Versorgungsbus fließenden Gleichstrom überlagert ist. Ein zu hoher Rippelstrom kann Störungen in den Baugruppen, beispielsweise Störungen in Form einer fehlerhaften Datenübertragung, bewirken bzw. Bauteile dieser Baugruppen zerstören. Darüber hinaus kann aufgrund eines Rippelstroms das Verhalten im Hinblick auf die elektromagnetische Verträglichkeit (EMV-Verhalten) der Baugruppen störend beeinflusst werden.

Um einen derartigen Rippelstrom weitgehend zu vermeiden bzw. diesen zu verringern, sind die Baugruppen mit geeigneten Filter- und/oder Dämpfungsmitteln versehen. Es kann allerdings vorkommen, dass diese Mittel fehlerbehaftet sind oder dass Baugruppen von Fremdherstellern die Anforderungen nicht erfüllen, die der Hersteller des Automatisierungsgerätes im Hinblick auf die elektromagnetischen Eigenschaften einzusetzender Baugruppen spezifiziert, wodurch - wie erläutert - derartige Baugruppen den Betrieb des Automatisierungsgerätes stören können.

Der Erfindung liegt daher die Aufgabe zugrunde, ein Verfahren der eingangs genannten Art anzugeben, mittels dessen Baugruppen erkannt werden können, deren elektromagnetischen Eigenschaften für einen ordnungsgemäßen Betrieb eines Automatisierungsgerätes nicht geeignet sind. Darüber hinaus ist ein Automatisierungsgerät zu schaffen, welches derartige Baugruppen erkennt.

Diese Aufgabe wird im Hinblick auf das Verfahren durch die im kennzeichnenden Teil des Anspruchs 1, bezüglich des Automatisierungsgerätes durch die im kennzeichnenden Teil des Anspruchs 3 angegebenen Maßnahmen gelöst.

Die Erfindung geht von der Idee aus, zu Diagnosezwecken den Wechselanteil des auf dem Versorgungsbus fließenden Stroms zu detektieren und geeignet auszuwerten.

Vorteilhaft ist, dass Baugruppen von Fremdherstellern, welche die Spezifikation des Herstellers des Automatisierungsgerätes im Hinblick auf die elektromagnetischen Eigenschaften nicht erfüllen, sowie fehlerhafte Baugruppen bezüglich dieser Eigenschaften einfach erkannt werden können.
Für den Fall, dass eine einen Rippelstrom repräsentierende Gleichspannung über einem Referenzwert liegt, welcher einen störungsfreien Betrieb des Automatisierungsgerätes repräsentiert, werden z. B. die Baugruppen nacheinander von dem Versorgungsbus demontiert. Falls nach der Demontage einer Baugruppe die Gleichspannung nicht mehr über dem Referenzwert liegt, weist dies darauf hin, dass die gerade demontierte Baugruppe fehlerbehaftet ist.

Selbstverständlich ist es möglich, im Rahmen des Zusammenbaus des Automatisierungsgerätes nach jeder Montage bzw. jedem Stecken einer Baugruppe auf den Versorgungsbus die den Rippelstrom repräsentierende Gleichspannung zu erfassen und mit dem Referenzwert zu vergleichen. Dadurch können fehlerhafte Baugruppen sofort während des Zusammenbaus des Automatisierungsgerätes erkannt werden.

In einer Ausgestaltung der Erfindung ist vorgesehen, dass eine Abweichung der Gleichspannung von dem Referenzwert einem Anwender auf einer Anzeigeeinheit angezeigt wird, wodurch der Anwender unmittelbar auf fehlerhafte Baugruppen hingewiesen wird.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: eine Schaltungsanordnung zur Erfassung eines Rippelstroms,
- Figuren 2 und 3: einen Spannungs- und Stromverlauf und
- Figur 4: ein modulares Automatisierungsgerät.

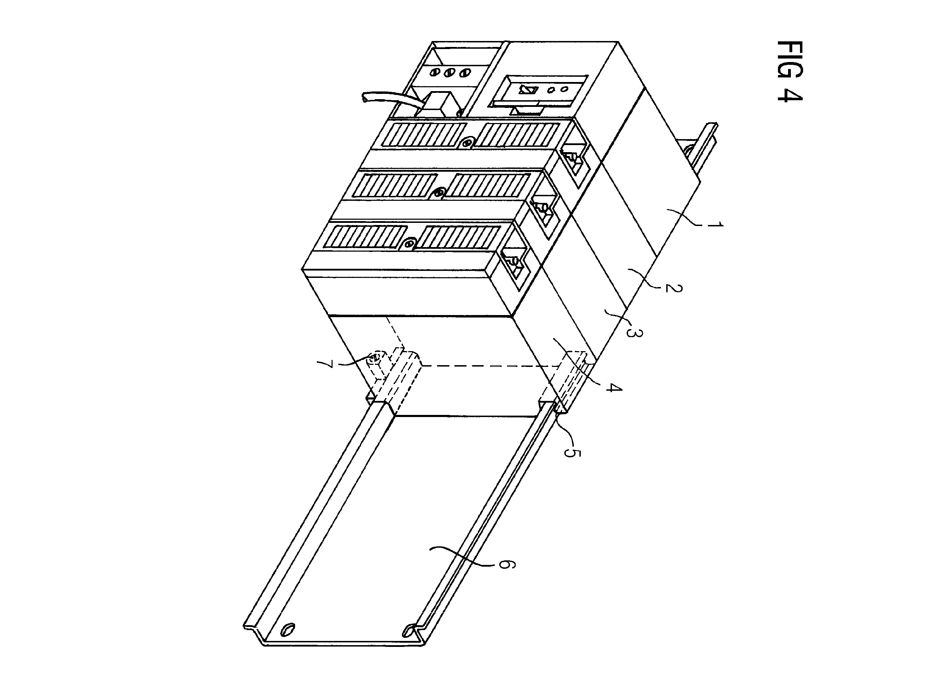

Es wird zunächst auf Figur 4 verwiesen, in welcher ein an sich bekanntes modulares Automatisierungsgerät dargestellt ist. Dieses weist Baugruppen 1 bis 4 auf, von denen die Baugruppe 1 als Stromversorgungsbaugruppe und die Baugruppen 2 bis 4 als Zentral (CPU)- und/oder Peripheriebaugruppen ausgestaltet sind. Die Baugruppen 1 bis 4 sind über einen hier nicht dargestellten Rückwandbus miteinander verbunden, wobei dieser einen niederohmigen Versorgungsbus umfasst. Über diesen Versorgungsbus versorgt die Stromversorgungsbaugruppe 1 die Baugruppen 2 bis 4 mit einer geeigneten Gleichspannung, welche die Stromversorgungsbaugruppe 1 z. B. aus einer 230 V-Wechselspannung erzeugt. Die Baugruppen 1 bis 4 sind jeweils mit einer Hakvorrichtung 5 versehen, mittels der die jeweilige Baugruppe 1 bis 4 auf einen Träger 6 aufschwenkbar ist, wobei eine aufgeschwenkte Baugruppe 1 bis 4 durch eine Schraubverbindung 7 auf der Tragschiene 6 gesichert wird. Selbstverständlich weisen die Baugruppen für den Betrieb des Automatisierungsgerätes geeignete elektrische bzw. elektronische Komponenten auf, welche zum Verständnis der Erfindung ohne Bedeutung sind und daher nicht erläutert werden brauchen.

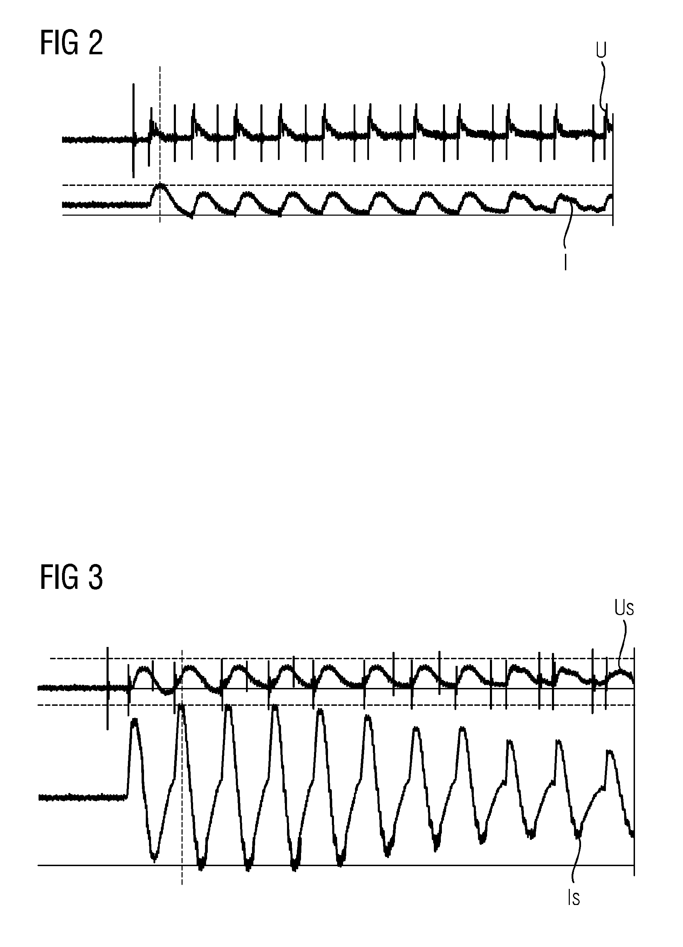

Im Folgenden wird angenommen, dass die Baugruppen 2 bis 4 aufgrund ihrer elektromagnetischen Eigenschaften für einen ordnungsgemäßen Betrieb des Automatisierungsgerätes geeignet sind. Der Versorgungsbus des Automatisierungsgerätes ist mit einer Ausgangsspannung U beaufschlagt (Figur 2), die eine Gleichspannung und überlagerte hochfrequente Wechselspannungen umfasst, wobei die Stromversorgungsbaugruppe 1 die Gleichspannung aus der 230 V-Wechselspannung erzeugt und die hochfrequenten Wechselspannungen z. B. aufgrund von Schaltvorgängen in der Stromversorgungsbaugruppe 1 entstehen. Eine derartige Ausgangsspannung U bewirkt einen über den Versorgungsbus fließenden Laststrom I, z. B. einen Laststrom von 60 mA, welcher einen Gleichstrom und einen überlagerten Wechselstrom (Rippelstrom) umfasst. Dieser Rippelstrom ist im vorliegenden Beispiel so gering, dass ein ordnungsgemäßer Betrieb des Automatisierungsgerätes nicht störend beeinflusst wird.

Es kann nun vorkommen, dass z. B. die Baugruppe 2 aufgrund ihrer defekten Filter- und/oder Dämpfungsmittel sehr schlechte elektromagnetische Eigenschaften aufweist. In diesem Fall fließt z. B. bei einer Ausgangsspannung Us über den Versorgungsbus ein Laststrom Is von ca. 420 mA, wobei dessen Wechselstromanteil bzw. der Rippelstrom ca. um den Faktor 3 höher ist (Figur 3) als der Rippelstrom im Falle einer nicht fehlerhaften Baugruppe. Dieser überhöhte Rippelstrom wirkt sich gewöhnlich störend auf den ordnungsgemäßen Betrieb des Automatisierungsgerätes aus, beispielsweise in Form eines störenden Übersprechverhaltens, was bedeutet, dass die Baugruppe für einen ordnungsgemäßen Betrieb im Automatisierungsgerät nicht geeignet ist.

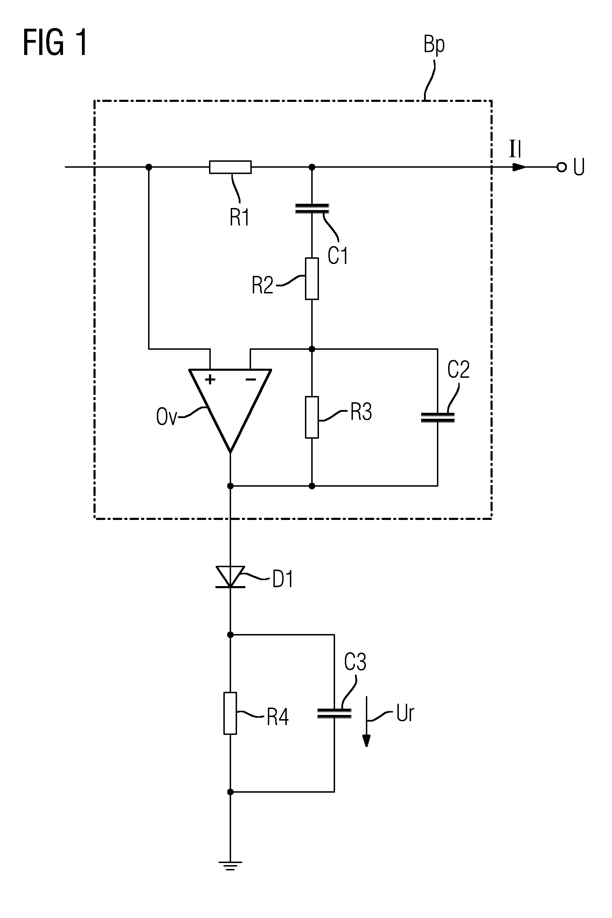

Im Folgenden wird auf Figur 1 Bezug genommen, in der eine Schaltungsanordnung zum Detektieren eines Rippelstroms dargestellt ist, die Bestandteil einer Überwachungseinheit einer Stromversorgungsbaugruppe ist. Störende Wechselstromanteile (Rippelstrom) eines Laststroms Il werden mittels eines Bandpasses Bp erkannt, wobei ein am Sensor-Widerstand R1 angeschlossener Operationsverstärker Ov mit geeigneter Beschaltung C1, R2, R3, C2 zur Filterung eines gewünschten Frequenzbandes, z. B. zwischen 50 und 150 kHz, vorgesehen ist. Eine dem Bandpass Bp nachgeschaltete Diode D1 demoduliert den gefilterten, hochfrequenten Strom, wobei über eine dieser Diode D1 nachgeschaltete Parallelschaltung aus einem Widerstand R4 und einem Kondensator C3 eine Gleichspannung Ur abfällt, welche proportional zum Rippelstrom ist bzw. welche diesen Rippelstrom repräsentiert. Die Überwachungseinheit vergleicht diese Gleichspannung Ur mit einem Referenzwert, welcher einen störungsfreien Betrieb der Baugruppen repräsentiert, und speichert das Vergleichsergebnis für eine Auswertung ab und/oder protokolliert dieses Vergleichsergebnis. Für den Fall, dass das Vergleichsergebnis darauf hinweist, dass die Gleichspannung Ur über dem Referenzwert liegt, so bedeutet dies, dass mindestens eine fehlerhafte Baugruppe im Automatisierungsgerät eingesetzt bzw. betrieben wird. Um diese fehlerhafte Baugruppe zu erkennen, werden z. B. die Baugruppen nacheinander von dem Versorgungsbus demontiert und nach jeder Demontage das Vergleichsergebnis überprüft. Falls nach der Demontage einer Baugruppe das Vergleichsergebnis darauf hinweist, dass die Gleichspannung kleiner als der Referenzwert ist, so bedeutet dies, dass die gerade demontierte Baugruppe die fehlerhafte Baugruppe ist. Um auf die fehlerhafte Baugruppe unmittelbar hinzuweisen, wird einem Anwender das Vergleichsergebnis auf einer LED-Anzeige der Stromversorgungsbaugruppe 1 angezeigt. Selbstverständlich kann das Automatisierungsgerät in einen STOPP-Zustand überführt werden, falls die Überwachungseinheit einen zu hohen Rippelstrom detektiert.

Die Erfindung lässt sich somit wie folgt zusammenfassen: Ein Verfahren zum Betreiben eines Automatisierungsgerätes, das mehrere über einen Versorgungsbus verbundene Baugruppen 2 bis 4 aufweist, über welchen mittels einer Stromversorgungsbaugruppe 1 die Baugruppen 2 bis 4 mit einer Spannung versorgt werden, zeichnet sich dadurch aus, dass mittels einer Überwachungseinheit aus einem Laststrom Il eine einen Rippelstrom repräsentierende Gleichspannung Ur detektiert wird, wobei diese Gleichspannung Ur mit einem Referenzwert verglichen wird, welcher einen störungsfreien Betrieb der Baugruppen 2 bis 4 repräsentiert, und wobei das Vergleichsergebnis für eine Auswertung abgespeichert und/oder protokolliert wird. Mittels derartiger Maßnahmen können Baugruppen 2 bis 4 erkannt werden, deren elektromagnetischen Eigenschaften für einen ordnungsgemäßen Betrieb eines Automatisierungsgerätes nicht geeignet sind.

## Patentansprüche

1. Verfahren zum Betreiben eines Automatisierungsgerätes, das mehrere über einen Versorgungsbus verbundene Baugruppen (2 bis 4) aufweist, über welchen mittels einer Stromversorgungsbaugruppe (1) die Baugruppen (2 bis 4) mit einer Spannung versorgt werden, **dadurch gekennzeichnet, dass** mittels einer Überwachungseinheit aus einem Laststrom (Il) eine einen Rippelstrom repräsentierende Gleichspannung (Ur) detektiert wird, wobei diese Gleichspannung (Ur) mit einem Referenzwert verglichen wird, welcher einen störungsfreien Betrieb der Baugruppen (2 bis 4) repräsentiert, und wobei das Vergleichsergebnis für eine Auswertung abgespeichert und/oder protokolliert wird.

2. Verfahren nach Anspruch 1, **dadurch gekennzeichnet, dass** eine Abweichung der Gleichspannung (Ur) von dem Referenzwert auf einer Anzeigeeinheit angezeigt wird.

3. Automatisierungsgerät mit mehreren über einen niederohmigen Versorgungsbus verbundenen Baugruppen (2 bis 4), über welchen eine Stromversorgungsbaugruppe (1) die Baugruppen (2 bis 4) mit einer Spannung versorgt, **dadurch gekennzeichnet, dass** eine Überwachungseinheit dazu ausgebildet ist, aus einem Laststrom (Il) eine einen Rippelstrom repräsentierende Gleichspannung (Ur) zu detektieren und diese Gleichspannung (Ur) mit einem Referenzwert zu vergleichen, welcher einen störungsfreien Betrieb der Baugruppen (2 bis 4) repräsentiert, und ferner das Vergleichsergebnis für eine Auswertung abzuspeichern und/oder zu protokollieren.

4. Automatisierungsgerät nach Anspruch 3, **dadurch gekennzeichnet, dass** die Überwachungseinheit ferner dazu ausgebildet ist, eine Abweichung der Gleichspannung (Ur) von dem Referenzwert auf einer Anzeigeeinheit anzuzeigen.

5. Automatisierungsgerät nach Anspruch 3 oder 4, **dadurch gekennzeichnet, dass** die Überwachungseinheit Bestandteil der Stromversorgungsbaugruppe (1) ist.
